# EUROPEAN PATENT APPLICATION

(11) **EP 1 357 513 A2**
(43) Date of publication of application: **29.10.2003**
(21) Application number: 03009259.7
(22) Date of filing: 23.04.2003
(51) Int. Cl.: G06K 19/077

(54) **Noncontact sensor coil and tag system**

(30) Priority: 24.04.2002 JP 2002122909
(71) Applicant: Smart Card Co., Ltd., Osaka-shi, Osaka 550-0004 (JP)
(72) Inventor: Arimura, Kunitaka c/o Smart Card Co., Ltd., Osaka-shi, Osaka 550-0004 (JP)
(74) Representative: Schäfer, Matthias, Dipl.-Ing.

(57) **Abstract**

The present invention is characterized such that (1) one pair or plural pairs of a coil, which generates a magnetic field toward an axial direction of a cylinder on a metal plate, and a coil, which generates a magnetic field in an opposite direction, so that a magnetic field, which can not be escaped, generates a magnetic field in a direction perpendicular to the metal plate, (2) a magnetic material is used for a core of a coil, (3) a coil is formed in a manner that it is brought into close contact with a metal surface as easily as possible, and (4) in addition to the above-mentioned coil, a coil, whose axis is perpendicular to the metal surface, is added for the purpose of flowing the current in a way for strengthening a magnetic field perpendicular to a metal surface at the position which is slightly separated from the metal surface.

## Description

### [Field of the Invention]

The present invention relates to a new method and arrangement of a sensor coil of a noncontact IC card.

### [Prior Art]

In a sensor coil of a noncontact IC card that is conventionally used, because of a plane-like card, a magnetic field is generated in a direction perpendicular to a surface of the card in order to wind a coil in the surface of the card. Also, a sensor antenna of a similar shape has to be installed on a wall side for the purpose of receiving a magnetic field and transmitting signals or electric power to the card. When a sensor antenna is mounted on a wall face, where cards are opposed, magnetic field is perpendicular to the wall face, so that such a sensor coil that corresponds to the magnetic field is a coil, which is generally wound in the same direction as that of the wall face.

If the wall face is made of metal, a reverse-current is generated to such a coil by a mirror (image) effect, and a magnetic field is absorbed, and thereby the coil is not effectively acted as a sensor. Nowadays, most buildings have iron walls. When a sensor coil is mounted to the iron wall, communication is disturbed and impossible between the card and the sensor, or the distance between the card and the sensor becomes significantly short.

### [Problem to Be Solved by the Invention]

An object of the present invention is to provide a means, which is not projected from a metal surface such as an iron wall, and can be communicated with a card, a tag and a sensor at higher precision even if an antenna is arranged in a plane form. The present invention is used as either a tag or a sensor in some cases, so that sensitivity is not deteriorated by influences of the metal surface.

### [Means for Solving the Problem]

For the purpose of achieving said object, one pair or plural pairs of a coil, which generates a magnetic field toward an axial direction of a cylinder, and a coil, which generates a magnetic field in an opposite direction are formed on a metal plate, so that a magnetic field, which can not be escaped, generates a magnetic field in a direction perpendicular to the metal plate. The present invention can be applied for a sensor and a tag in a manner to transmit and receive signals as is known from reversibility of communication.

As described in Claim 2, the present invention is characterized such that a magnetic material is used for a core of a coil.

As described in Claim 3, the present invention is characterized such that a coil is made flat in a manner to be brought into close contact with a metal surface as easily as possible.

As described in Claim 4, in addition to said sensor coil, such a coil is added the purpose of flowing the current in a way for strengthening a magnetic field perpendicular to a metal surface at the position which is slightly separated from the metal surface.

### [Brief Description of the Drawings]

Figure 1 illustrates a general loop.
Figure 2 illustrates a conventional loop, which is arranged near the metal surface.
Figure 3 illustrates a conventional loop, which is near the metal surface.
Figure 4 illustrates an excitation coil, which is used in the present invention.
Figure 5 illustrates a mechanism that a pair of excitation coils are arranged near the metal surface to generate a vertical magnetic field according to the present invention.
Figure 6 illustrates plural pairs of excitation coils according to the present invention.
Figure 7 illustrates a pair of excitation coils that are constituted with square-shaped coils.
Figure 8 illustrates the combination of actuating coils in another embodiment of the present invention.
Figure 9 illustrates a noncontact sensor coil, which is actually constituted in a cover according to the present inevention.

### [Embodiment of the Invention]

An embodiment of a noncontact sensor coil and a tag system according to the present invention will be concretely described with reference to the drawings as follows.

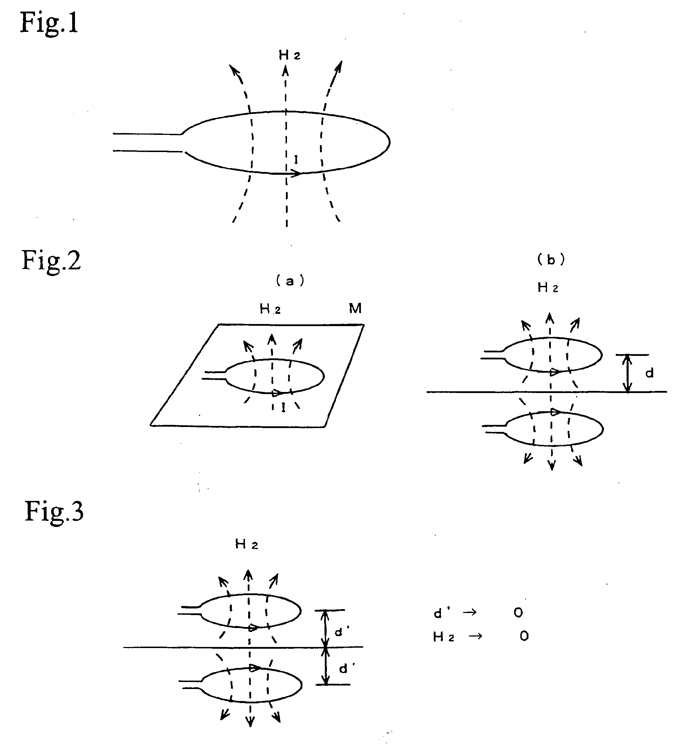

Figure 1 shows a status of a magnetic filed H generated by a general loop current I, in which a magnetic field in a direction for passing through an axis in the loop is designated as H2.

Figure 2 illustrates a structure and function of a conventional sensor and a conventional tag, while a loop (coil) is placed immediately above a metal surface M and the loop (coil) is arranged by a distance d in parallel to the metal surface. Figure 2(a) is a perspective view of the sensor and the tag seen from above, and Figure 2(b) illustrates the action thereof. The respective loops are separated by the distance d from the metal surface M existing in the middle of two loops, and the lower loop is an image of the upper loop by a mirror effect. Accordingly, current and a magnetic field are generated in a direction opposed to the upper loop, thereby absorbing each other. Because all of conventional sensor antennas and coils of the tag have such a structure, when the sensor is made to approach to the metal plate or the iron wall, sensitivity thereof is deteriorated, and thereby a communication distance between the card and the sensor, namely a communication reaching distance becomes short.

Figure 3 shows the above condition, in which as the distance d' approaches to zero, the magnetic field H2 also approaches to zero.

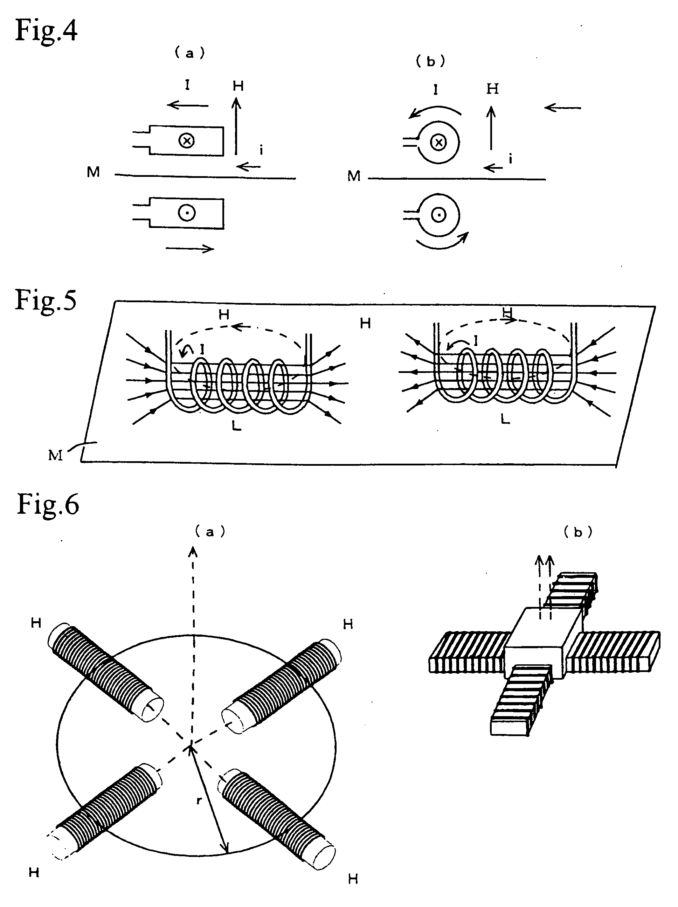

As shown in Figure 4, when the cross section of the coil is constituted perpendicular to the metal surface, a magnetic field of image by a mirror effect is added, so that the entire magnetic field is doubled. Figure 4(a) shows a square-like loop, and Figure 4(b) shows a circular loop. In both cases, the induced voltage is generated to the coil by the face current i. Or, the magnetic field H is generated by the coil current I, and the magnetic flow or the current i is generated to the metal surface.

Figure 5 shows a sensor coil or a tag system according to the present invention, in which a magnetic field generated in a direction parallel to the metal surface is opposed using the above-mentioned principle, so that a direction of the magnetic field is changed to generate a magnetic field, which is perpendicular to the metal surface.

Coils L are wound around cores such as a magnetic material, and opposed to each other. Magnetic fields H are generated by the current I in a direction for opposing to each other, so that such a magnetic field perpendicular to the metal surface M is generated at the center part of the coil.

Figure 6 shows two pairs of coils (i.e., four coils) are arranged in a manner that they are separated from the equal distance r from the center. As the number of pairs increases, a central magnetic field is increased to form a strong magnetic field. In Figure 6, two pairs of coils are used, but larger number of pairs may be used. Because points that are separated by equal distance from the center constitute a circle, the coils may be arranged almost in a circular form. In Figure 6(b), a magnetic path is composed of ferrite in a manner that a vertical magnetic field is easily generated at the core 1 and the center part of the coi.

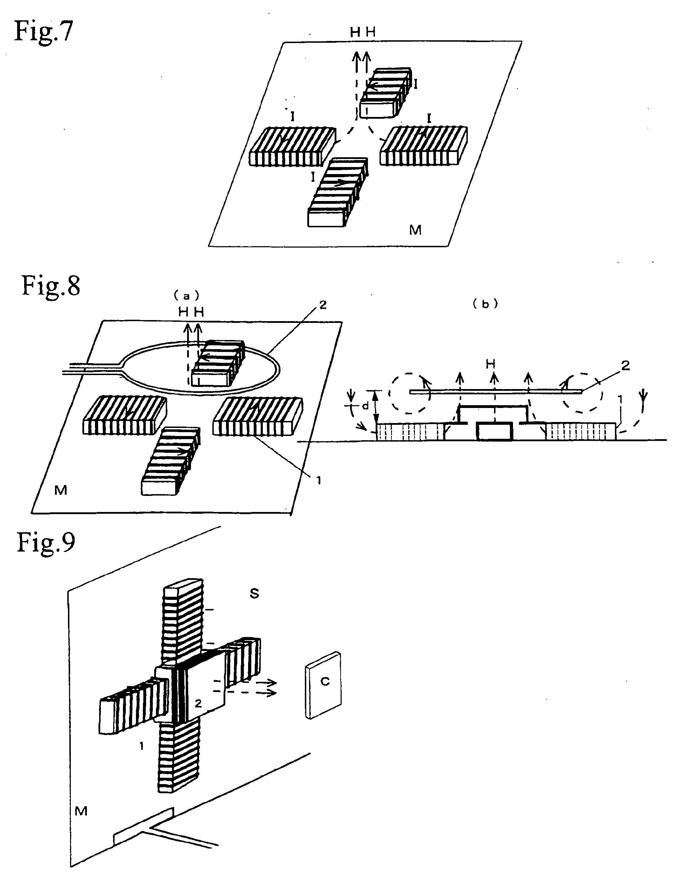

Figure 7 shows a coil, which is composed of a square-shaped coil. The square-shaped coils can make the entire coil thinner, and can form stronger coupling with the current i of the metal surface near the metal surface. A strong magnetic flux can be obtained at the center part by the magnetic field H generated by the current I flowing through the coil.

Figure 8 shows another performance of the coil. In Figure 8(a), the coils 2 that are similar to the conventional coils are arranged by the distance d from an excitation coil 1 near the metal surface. It is conventionally difficult to generate a vertical magnetic field, because the magnetic field is absorbed by the metal surface. According to the present invention, however, because the excitation coil 1 is provided and a magnetic core provides a return circuit of the magnetic field generated at the loop coil 2, magnetic fields can be added each other.

Figure 8(a) is a perspective view showing the combination of a coil 1 and a coil 2 with different functions above the metal surface M, and Figure 8(b) is a side view thereof.

Figure 9 shows a status that a noncontact coil of the present invention which is opposed to an actual noncontact card c is accommodated in a case S. The loop coil 2 arranged at the top part is constituted in a square shape according to the structure.

### [Effects of the Invention]

As described above, in the case of a conventional sensor antenna, because a loop face exists in parallel to a metal surface, current or a magnetic field is absorbed. Thereby, it is difficult to elongate the signal reaching distance between a sensor and a card or a tag, because the communication distance to the card, the tag or the sensor becomes short.

According to a method of a noncontact sensor coil and a tag system of the present invention, the metal surface can be positively utilized to double a magnetic field. Then, the doubled magnetic fields are made to be opposed to each other to generate a magnetic field of a vertical component. Furthermore, a coil that is normal to the existing coil is added, so that a stronger magnetic field can be obtained. Therefore, the present invention can be utilized at high value as a sensor and a tag of a noncontact coil, which will be used in the future.

### [Explanation of Numerals]

- 1: excitation coil
- 2: coil
- c: card or sensor coil
- d: distance between excitation coil 1 and coil 2
- d': distance between coil 2 and metal surface
- H: magnetic field
- I: coil current
- i: metal surface current
- L: coil
- M: metal surface
- r: radius of circle (distance from center of excitation coil)
- S: sensor or tag system

## Claims

1. A noncontact sensor coil and a tag system, characterized such that (1) a pair of coils, which have approximately the same size and same winding number for generating a magnetic field toward an axial direction of a perimeter, are formed on a metallic plate and opposed to each other having a certain distance in a way for absorbing the magnetic field, and (2) one pair or plural pairs of coils are installed to generate a magnetic field in a direction perpendicular to the metal surface.

2. A noncontact sensor coil and a tag system as set forth in Claim 1, characterized such that a magnetic material is used for a core of a coil.

3. A noncontact sensor coil and a tag system as set forth in Claim 1, characterized such that a coil is formed into a flat plane in a manner that it is brought into close contact with a metal surface as easily as possible.

4. A noncontact sensor coil and a tag system, in addition to the noncontact sensor coil of Claim 1, characterized such that a coil that is wound in a perimeter direction is added for the purpose of flowing the current in a way for strengthening a magnetic field perpendicular to a metal surface at the position which is slightly separated from the metal surface.
